Europäisches Patentamt

European Patent Office

Office européen des brevets

(11) Veröffentlichungsnummer: **0 201 677**
**B1**

# (12) EUROPÄISCHE PATENTSCHRIFT

(45) Veröffentlichungstag der Patentschrift: **30.01.91**

(21) Anmeldenummer: **86102744.9**

(22) Anmeldetag: **03.03.86**

(51) Int. Cl.⁵: **G 05 D 23/24, B 29 C 65/02**

(54) **Vorrichtung zum Regeln der Temperatur von Schweissbändern.**

(30) Priorität: **08.05.85 DE 3516601**

(43) Veröffentlichungstag der Anmeldung:
**20.11.86 Patentblatt 86/47**

(45) Bekanntmachung des Hinweises auf die
Patenterteilung:
**30.01.91 Patentblatt 91/05**

(84) Benannte Vertragsstaaten:
**BE FR GB IT**

(56) Entgegenhaltungen:
**DE-A-2 447 669**
**DE-B-2 549 651**
**FR-A-2 512 308**

(73) Patentinhaber: **Windmöller & Hölscher**
**Münsterstrasse 48-52**
**D-4540 Lengerich i.W. (DE)**

(72) Erfinder: **Marek, Rainer, Dipl.-Ing.**
**Breite Strasse 2**
**D-4440 Rheine (DE)**

(74) Vertreter: **Lorenz, Eduard et al**
**Rechtsanwälte Eduard Lorenz - Bernhard Seidler**
**Margrit Seidler - Dipl.-Ing. Hans-K. Gossel Dr. Ina**
**Philipps - Dr. Paul B. Schäuble Dr. Siegfried**
**Jackermeier**
**Dipl.-Ing. Armin Zinnecker Widenmayerstrasse**
**23 D-8000 München 22 (DE)**

**Beschreibung**

Die Erfindung betrifft eine Vorrichtung zum Regeln der Temperatur von Bändern zum Schweißen von Kunststoffolien oder dergleichen mit einer Dividierschaltung zur Ermittlung der Temperatur des Schweißbandes aus den Spannungswerten $U_s$ und dem Stromwerten $T_s$ des Heizstromkreises und mit einem Regler, der die Leistung des Heizstromkreises entsprechend der Abweichung des ermittelten Ist-Wertes $v_w$ der Temperatur des Schweißbandes von einem vorgegebenen Soll-Wert anpaßt.

Bei einer aus der DE—B1—25 49 651 bekannten Vorrichtung dieser Art wird die bekannte Erscheinung nutzbar gemacht, daß der Widerstand des Schweißbandes mit zunehmender Temperatur zunimmt, so daß sich aus dem jeweiligen Widerstandswert die Temperatur des Schweißbandes ermitteln läßt ($v_w=f(U_s/l_s)$, wobei $v_w$ die Temperatur des warmen Schweißbandes und $U_s$ die Spannung und $l_s$ der Strom des Heizstromkreises sind). Bei der bekannten Vorrichtung wird also aus dem jeweiligen Widerstandswert des Schweißbandes dessen Temperatur ermittelt, wobei die Dividierschaltung über den Regler den Strom des Heizstromkreises derart steuert, daß die Stromzuführung zu dem Schweißband entsprechend der jeweiligen, konstant zu haltenden Schweißbandtemperatur erfolgt.

Die bekannte Vorrichtung arbeitet zufriedenstellend, wenn die eingesetzten Schweißbänder sowohl nach ihrer geometrischen Gestalt als auch nach ihrer Materialzusammensetzung gleich sind, weil dann diese Größen und Eigenschaften der Schweißbänder bei der Ist-Wert-Messung und Soll-Wert-Vorgabe berücksichtigt werden können.

Schweißbänder sind nun aber nach ihren geometrischen Abmessungen und ihrer Materialzusammensetzung unterschiedlich, so daß bei der bekannten Vorrichtung nach einem Schweißbandwechsel aufwendige Einjustierungsarbeiten vorgenommen werden müssen, damit sich die Ist-Temperatur des neuen Schweißbandes mit hinreichender Genauigkeit auf die vorgegebene Soll-Temperatur einregeln läßt.

Aufgabe der Erfindung ist es daher, die eingangs angegebene Vorrichtung derart zu verbessern, daß sie sich auf das jeweils verwendete Schweißband, insbesondere nach einem Schweißbandwechsel, einfach und schnell unter Berücksichtigung der gegebenenfalls geänderten Abmessungen und Materialzusammensetzung einstellen läßt.

Erfindungsgemäß wird diese Aufgabe dadurch gelöst, daß die zum Warmwiderstand $R_w=U_s/l_s$ des Schweißbandes analoge Ausgangsspannung der Dividierschaltung und eine zum Kaltwiderstand $R_k$ des Schweißbandes analoge Spannung einer zweiten Dividierschaltung eingegeben werden, dessen dem Quotienten $R_w/R_k$ dieser beiden Spannungen analoge Ausgangsspannung mit der Ausgangsspannung einer Dividierschaltung, die der Summe einer zu der Kalttemperatur $v_k$ des Schweißbands analogen Spannung und einer zu einer aus der Formel $v_w=R_w/R_k(\tau+v_k)-\tau$ ermittelbaren rechnerischen Hilfstemperatur $\tau$ analogen Spannung entspricht, in einer Multiplizierschaltung multipliziert wird, daß durch eine erste Subtrahierschaltung von der Ausgangsspannung der Multiplizierschaltung die zu der rechnerischen Hilfstemperatur $\tau$ analoge Spannung zur Bildung der zur Ist-Temperatur $v_w$ des warmen Schweißbandes analogen Spannung abgezogen wird und daß dem Regler die von einer zweiten Subtrahierschaltung gebildete Spannung eingegeben wird, die der Differenz der Analogspannung der ermittelten Ist-Temperatur $v_w$ und der vorgegebenen Soll-Temperatur des Schweißbandes entspricht.

Während bei der aus DE—B1—25 49 651 bekannten Vorrichtung ein Widerstand vorgegeben wird, der einer bestimmten gewünschten Temperatur des Schweißbandes entspricht, wird die warme Temperatur des Schweißbandes in der erfindungsgemäßen nach der allgemein bekannten Gleichung

$$v_w=R_w/R_k(\tau+v_k)-\tau$$

ermittelt. Dabei sind $v_w$ die Temperatur des warmen Schweißbandes, $v_k$ die Temperatur des kalten Schweißbandes, $R_w$ der Widerstand des warmen Schweißbandes, $R_k$ der Widerstand des kalten Schweißbandes und $\tau=1/\alpha 20-20°C$ eine rechnerische Hilfstemperatur. Bei einem Schweißbandwechsel sind also lediglich der Kaltwiderstand des Schweißbandes und dessen Kalttemperatur zu messen und entsprechende Analogspannungen in die Rechenschaltung einzugeben. Der Kaltwiderstand wird üblicherweise von dem Hersteller angegeben, so daß dieser nicht erst gemessen zu werden braucht. Auch der Temperaturkoeffizient $\alpha 20$ wird als Materialkonstante von dem Hersteller angegeben und kann in die Rechenschaltung eingegeben werden.

Zweckmäßigerweise ist zur Bildung der zum Kaltwiderstand des Schweißbandes analogen Spannung ein aus einem Potentiometer bestehender Spannungsteiler vorgesehen. Das Potentiometer kann mit einer entsprechend geeichten Skala versehen sein, so daß von diesem nach Einstellung des entsprechenden Wertes des Kaltwiderstandes der analoge Spannungswert abgegriffen wird.

In entsprechender Weise kann zur Bildung der zur Kalttemperatur des Schweißbandes analogen Spannung ein aus einem Potentiometer bestehender Spannungsteiler vorgesehen sein, der ebenfalls mit einer eine einfache Einstellung ermöglichenden Skala versehen sein kann.

Es ist bekannt, daß der Temperaturkoeffizient $\alpha$ sich mit zunehmender Temperatur ebenfalls ändert. In weiterer Ausgestaltung der Erfindung ist daher vorgesehen, daß zur Ermittlung der dem temperaturabhängigen Temperaturkoeffizienten $\alpha$ analogen Spannung als Einflußgröße der zu der rechnerischen Hilfstemperatur $\tau$ analogen Spannung aus der Ausgangsspannung der Dividierschaltung ein Funktionsnetzwerk vorgesehen ist, in dem die zu den jeweiligen Ausgangsspannungen der Dividierschaltung gehörenden analogen Spannungswerte des Temperaturkoeffizienten $\alpha$ gespeichert sind.

Nach einer weiteren Ausgestaltung der Erfindung ist eine Schaltung zur Ermittlung des Kaltwiderstandes des Schweißbandes vorgesehen, die über eine Steuereinrichtung und einen Stellmotor den Spannungsteiler auf die zu dem ermittelten Kaltwiderstand analoge Spannung einstellt.

In entsprechender Weise kann eine Schaltung zur Ermittlung der Kalttemperatur des Schweißbandes vorgesehen sein, die über eine Steuereinrichtung und einen Stellmotor den Spannungsteiler auf die zu der ermittelten Kalttemperatur analoge Spannung einstellt.

Ausführungsbeispiele der Erfindung werden nachstehend anhand der Zeichnung näher erläutert. In dieser zeigt

Fig. 1 ein erstes Ausführungsbeispiel einer Schaltung für die Vorrichtung zum Regeln der Temperatur von Schweißbändern in schematischer Darstellung, bei der der gemessene Kaltwiderstand und die Kalttemperatur von Hand einzugeben sind,

Fig. 2 eine der Fig. 1 entsprechende Schaltung, die zusätzlich mit einer Schaltung zur Ermittlung des temperaturabhängigen Temperaturkoeffizienten $\alpha$ versehen ist, und

Fig. 3 eine der Fig. 1 entsprechende Schaltung, die mit zusätzlichen Meßschaltungen zur Ermittlung des Kaltwiderstandes des Schweißbandes und der Kalttemperatur versehen ist.

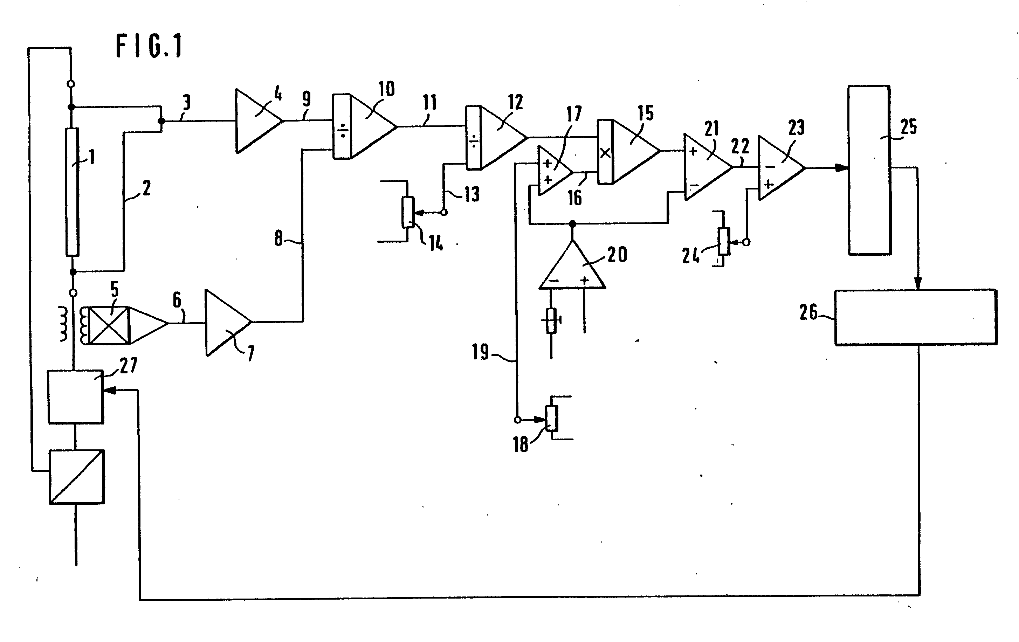

In dem Blockschaltbild nach Fig. 1 ist ein Schweißband 1 in dem Heizstromkreis angeordnet. Die an dem Schweißband 1 anliegende Spannung $U_s$ wird gemessen und über die Leitungen 2, 3 einem Verstärker 4 eingegeben. Durch einen Stromsensor 5, der aus einem üblichen Strommeßgerät bestehen kann, wird die Stromstärke $I_s$ des Heizstromkreises gemessen und in eine analoge Spannung umgewandelt. Diese Spannung wird über die Leitung 6 einem Verstärker 7 zugeführt. Sowohl die von dem Verstärker 4 als auch die von dem Verstärker 7 abgegebenen Analogspannungen werden über die Leitungen 8 und 9 einer Dividierschaltung 10 zugeführt, die eine dem Quotienten $U_s/I_s$ analoge Spannung bildet. Diese Analogspannung ist eine Funktion des Warmwiderstandes $R_w$ des Heizbandes 1. Über eine Leitung 11 wird diese Analogspannung einer zweiten Dividierschaltung 12 zugeführt. Über eine Leitung 13 wird eine weitere Spannung in die Dividierschaltung 12 eingegeben, die eine dem Kaltwiderstand $R_k$ entsprechende Analogspannung ist.

Diese Analogspannung wird an dem Potentiometer 14 eingestellt, und zwar dem zuvor gemessenen Widerstand des neu einzusetzenden Schweißbandes 1 im kalten Zustand, der beispielsweise 20, 30 oder 40°C betragen kann. Aus den beiden über die Leitungen 11 und 12 eingegebenen Spannungen wird durch die Dividierschaltung 12 eine Analogspannung gebildet, die dem

Quotienten $R_w/R_k$ entspricht. Die Ausgangsspannung der Dividierschaltung 12 wird in die Multiplizierschaltung 15 eingegeben. Außer dieser Spannung wird der Multiplizierschaltung 15 eine weitere Spannung über die Leitung 16 zugeführt, die eine in der Addierschaltung 17 gebildete Spannung ist.

In der Addierschaltung 17 werden zu der Kalttemperatur $v_k$ und der rechnerischen Hilfstemperatur $\tau$ analoge Spannungen addiert. Die zu der Kalttemperatur $v_k$ analoge Spannung wird von dem Potentiometer 18 abgegriffen, das mit einer Temperaturskala versehen ist, auf der die Temperatur eingestellt worden ist, bei der der Kaltwiderstand des neu einzusetzenden Bandes gemessen worden ist. Die auf der Skala markierten Temperaturwerte entsprechen den jeweils zugehörigen Analogspannungen. Zum Übertragen dieser Spannung dient die Leitung 19.

Die zweite Teilspannung entspricht einer zu der rechnerischen Hilfstemperatur $\tau$ analogen Spannung, die in der Subtrahierschaltung gebildet worden ist. In die Subtrahierschaltung 20 werden Analogspannungen entsprechend den Temperaturwerten $1/\alpha 20$ und 20°C eingegeben.

Die der rechnerischen Temperatur $\tau$ entsprechende Analogspannung wird nicht nur der Addierschaltung 17, sondern auch der Subtrahierschaltung 21 zugeführt, in die zusätzlich die von der Multiplizierschaltung 15 abgegebene Spannung eingeleitet wird. Die Subtraktion dieser in die Subtrahierschaltung 21 eingegebenen Spannungen ergibt eine Ausgangsspannung, die der Temperatur $v_w$ des warmen Schweißbandes entspricht. Diese Spannung wird über die Leitung 22 in eine weitere Subtrahierschaltung 23 eingegeben, die diesen eingegebenen Spannungswert mit einer in einem Potentiometer 24 eingestellten Spannung, die der Soll-Temperatur des Schweißbandes entspricht, vergleicht. Je nach ermittelter Abweichung dieser beiden Spannungen wird eine entsprechende Spannung in einen Regler 25 eingegeben, der ein Ausgangssignal erzeugt, welches einem Ansteuergerät 26 zugeführt wird, das den Leistungsregler 27 derart steuert, daß die Heizleistung des Schweißbandes 1 entsprechend der Abweichung von dem Sollwert erhöht oder verringert wird.

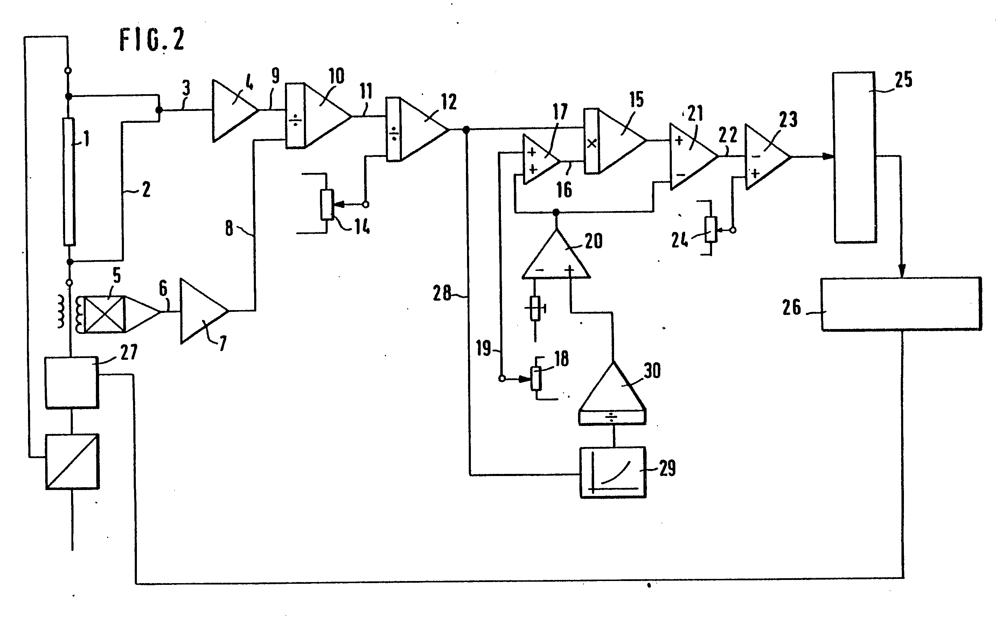

Das Ausführungsbeispiel gemäß dem Blockschaltbild nach Fig. 2 unterscheidet sich von dem nach Fig. 1 dadurch, daß ein Funktionsnetzwerk 29 vorgesehen ist, das eine dem tatsächlichen Temperaturkoeffizienten $\alpha$ entsprechende Analogspannung ausgibt, die eine Funktion des Quotienten $R_w/R_k$ ist. Das Funktionsnetzwerk, in die zu dem analogen Spannungswert $R_w/R_k$ entsprechenden $\alpha$-Werte gespeichert sind, ist durch die Leitung 28 mit dem Ausgang der Dividierschaltung 12 verbunden. Das Funktionsnetzwerk 29 ist mit der Dividierschaltung 30 verbunden, die eine zu dem Quotienten $1/\alpha$ analoge Spannung bildet, die dann als Teilspannung in die Subtrahierschaltung 20 eingegeben wird.

Nach dem Ausführungsbeispiel nach Fig. 2 wird also stets der tatsächlich vorhandene Tempera-

turkoeffizient α berücksichtigt, der sich bei unterschiedlichen Schweißbandtemperaturen einstellt. Die von dem Funktionsnetzwerk ausgegebenen Werte sind vorher entsprechend empirisch ermittelt oder von dem Schweißbandhersteller angegeben worden. Das Funktionsnetzwerk kann eine entsprechend austauschbare oder programmierbare Matrix enthalten.

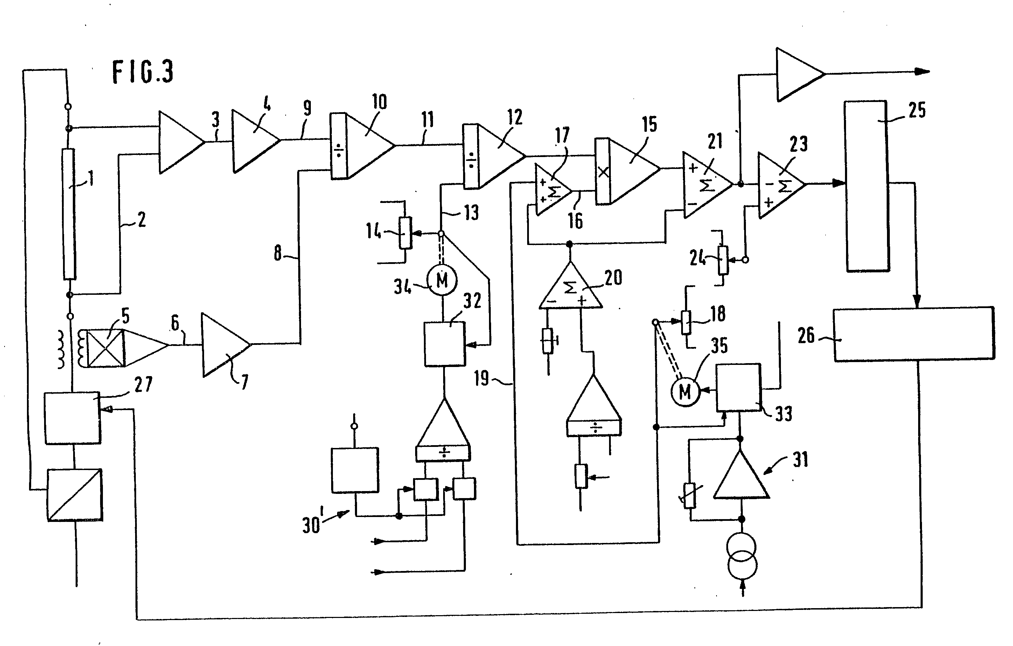

Bei dem Ausführungsbeispiel nach Fig. 3 sind zusätzlich Schaltungen 30', 31 zur Ermittlung des Kaltwiderstandes $R_k$ des Schweißbandes 1 und der Temperatur $v_k$, bei der der Kaltwiderstand gemessen worden ist, vorgesehen. Die diesen gemessenen Werten entsprechenden Analogspannungen werden in Steuerschaltungen 32, 33 eingegeben, die die Stellmotore 34, 35 steuern, die ihrerseits die Potentiometer 14, 18 auf die entsprechenden Analogspannungen des Kaltwiderstandes $R_k$ und der Kalttemperatur $v_k$ einstellen. Die Schaltung nach Fig. 3 ermöglicht somit eine Temperaturregelung unabhängig von Herstellerangaben und zuvor vorgenommenen Messungen, und diese kann auch zur Einjustierung und Nachjustierung wiederholt werden.

## Patentansprüche

1. Vorrichtung zum Regeln der Temperatur von Bändern zum Schweißen von Kunststofffolien oder dergleichen Folien mit einer Dividierschaltung (10) zur Ermittlung der Temperatur des Schweißbandes (1) aus den Spannungswerten $U_s$ und den Stromwerten $I_s$ des Heizstromkreises und mit einem Regler, der die Leistung des Heizstromkreises entsprechend der Abweichung des ermittelten Ist-Wertes $v_w$ der Temperatur des Schweißbandes von einem vorgegebenen Soll-Wert anpaßt, dadurch gekennzeichnet, daß die zum Warmwiderstand $R_w = U_s/I_s$ des Schweißbandes (1) analoge Ausgangsspannung der Dividierschaltung (10) und eine zum Kaltwiderstand $R_k$ des Schweißbandes (1) analoge Spannung einer zweiten Dividierschaltung (12) eingegeben werden, dessen dem Quotienten $R_w/R_k$ dieser beiden Spannungen analoge Ausgangsspannung mit der Ausgangsspannung einer Addierschaltung (17), die der Summe einer zu der Kalttemperatur $v_k$ des Schweißbands (1) analogen Spannung und einer zu einer aus der Formel $v_w = R_w/R_k \cdot (\tau + v_k) - \tau$ ermittelbaren rechnerischen Hilfstemperatur $\tau$ analogen Spannung entspricht, in einer Multiplizierschaltung (15) multipliziert wird, daß durch eine erste Subtrahierschaltung (21) von der Ausgangsspannung der Multiplizierschaltung (15) die zu der rechnerischen Hilfstemperatur $\tau$ analoge Spannung zur Bildung der zur Ist-Temperatur $v_w$ des warmen Schweißbandes (1) analogen Spannungen abgezogen wird und daß dem Regler (25) die von einer zweiten Subtrahierschaltung (23) gebildete Spannung eingegeben wird, die der Differenz der Analogspannungen der ermittelten Ist-Temperatur $v_w$ und der vorgegebenen Soll-Temperatur des Schweißbandes (1) entspricht.

2. Vorrichtung nach Anspruch 1, dadurch gekennzeichnet, daß zur Bildung der zum Kaltwiderstand $R_k$ des Schweißbandes (1) analogen Spannung ein aus einem Potentiometer (14) bestehender Spannungsteiler vorgesehen ist.

3. Vorrichtung nach Anspruch 1 oder 2, dadurch gekennzeichnet, daß zur Bildung der zur Kalttemperatur $v_k$ des Schweißbandes (1) analogen Spannung ein aus einem Potentiometer (18) bestehender Spannungsteiler vorgesehen ist.

4. Vorrichtung nach einem der Ansprüche 1 bis 3, dadurch gekennzeichnet, daß zur Ermittlung der dem temperaturabhängigen Temperaturkoeffizienten (α) analogen Spannung als Einflußgröße der zu der rechnerischen Hilfstemperatur $\tau$ analogen Spannung aus der Ausgangsspannung der Dividierschaltung (12) ein Funktionsnetzwerk (29) vorgesehen ist, in dem die zu den jeweiligen Ausgangsspannungen der Dividierschaltung (12) gehörenden Analogwerte des Temperaturkoeffizienten (α) gespeichert sind.

5. Vorrichtung nach einem der Ansprüche 1 bis 4, dadurch gekennzeichnet, daß eine Schaltung (30) zur Ermittlung des Kaltwiderstandes $R_k$ des Schweißbandes (1) vorgesehen ist, die über eine Steuereinrichtung (32) und einen Stellmotor (34) den Spannungsteiler (14) auf die zu dem ermittelten Kaltwiderstand $R_k$ analoge Spannung einstellt.

6. Vorrichtung nach einem der Ansprüche 1 bis 5, dadurch gekennzeichnet, daß eine Schaltung (31) zur Ermittlung der Kalttemperatur $v_k$ des Schweißbandes (1) vorgesehen ist, die über eine Steuereinrichtung (33) und einen Stellmotor (35) den Spannungsteiler (18) auf die der ermittelten Kalttemperatur $v_k$ analoge Spannung einstellt.

## Revendications

1. Dispositif de régulation de bandes servant à souder des feuilles en matière plastique ou des feuilles analogues, dispositif comportant un élément diviseur (10) pour la détermination de la température de la bande de soudage (1) à partir des valeurs de tension $U_s$ et des intensités $I_s$ du circuit de chauffage et un régulateur, qui ajuste la puissance du circuit de chauffage en fonction de l'écart, par rapport à une valeur de consigne prédéterminée, de la valeur réelle constatée $v_w$ de la température de la bande de soudage, caractérisé en ce que la tension de sortie de l'élément diviseur (10) correspondant à la résistance à chaud $R_w = U_s/I_s$ de la bande de soudage (1) et une tension correspondant à la résistance à froid $R_k$ de la bande de soudage (1) sont introduites dans un deuxième élément multiplicateur (12), dont la tension de sortie correspondant au quotient $R_w/R_k$ de ces deux tensions est multipliée dans un élément multiplicateur (15) par la tension de sortie d'un élément additionneur (17), laquelle correspond à la somme d'une tension correspondant à la température à froid $v_k$ de la bande de soudage (1) et d'une tension correspondant à une température auxiliaire déterminée par la calcul $\tau$, donnée par la formule $v_w = R_w/R_k \cdot (\tau + v_k) - \tau$, en ce que, par l'intermédiaire d'un premier élément soustracteur (21), l'on retire de la tension de sortie de l'élément multiplicateur (15) la tension correspondant à la température auxiliaire déterminée par le calcul τ afin d'obtenir la tension correspondant à la température réelle $v_w$ de la bande de soudage à chaud (1) et en ce que la tension obtenue dans un deuxième élément soustracteur (23) est introduite dans le régulateur (25), laquelle tension correspond à la différence des tensions correspondant, d'une part, à la température réelle $v_w$ déterminée et, d'autre part, à la température de consigne prédéterminée de la bande de soudage (1).

2. Dispositif selon la revendication 1, caractérisé en ce que pour obtenir la tension correspondant à la résistance à froid $R_k$ de la bande de soudage (1), il est prévu un diviseur de tension constitué d'un potentiomètre (14).

3. Dispositif selon la revendication 1 ou 2, caractérisé en ce qu'un diviseur de tension constitué par un potentiomètre (18) est prévu pour obtenir la tension correspondant à la température à froid $v_k$ de la bande de soudage (1).

4. Dispositif selon l'une des revendications 1 à 3, caractérisé en ce que pour la détermination, à partir de la tension de sortie de l'élément diviseur (12), de la tension correspondant au coefficient de température (α) variable avec la température, en tant que grandeur d'influence de la tension correspondant à la température auxiliaire déterminée par le calcul τ, il est prévu un réseau fonctionnel (29), dans lequel les valeurs analogiques de tension du coefficient de température (α) relevant des tensions respectives de sortie de l'élément diviseur (12) sont mises en mémoire.

5. Dispositif selon l'une des revendications 1 à 4, caractérisé en ce que pour la détermination de la résistance à froid $R_k$ de la bande de soudage (1), il est prévu un élément (30) qui par l'intermédiaire d'un mécanisme de commande (32) et d'un moteur de commande (34) règle le diviseur de tension (14) sur la tension correspondant à la résistance à froid $R_k$ déterminée.

6. Dispositif selon l'une des revendications 1 à 5, caractérisé en ce que pour la détermination de la température à froid $v_k$ de la bande de soudage (1), il est prévu un élément (31), qui par l'intermédiaire d'un mécanisme de commande (33) et d'un moteur de commande (35) règle le diviseur de tension (18) sur la tension correspondant à la température à froid $v_k$ déterminée.

**Claims**

1. Apparatus for controlling the temperature of bands for the welding of plastic films or such like sheeting, having a dividing circuit (10) for determining the temperature of the welding band (1) from the voltage values $U_s$ and the current values $I_s$ of the heating circuit and having a controller, to which the power of the heating circuit is adapted according to the deviation of the determined actual value $v_w$ of the temperature of the welding band from a predetermined set value, characterized in that the output voltage analogous to the hot resistance $R_w = U_s/I_s$ of the welding band (1) is entered in the dividing circuit (10) and a voltage analogous to the cold resistance $R_k$ of the welding band (1) is entered in a second dividing circuit (12), the output voltage of which, analogous to the quotient $R_w/R_k$ of these two voltages, is multiplied in a multiplying circuit (15) by the output voltage of an adding circuit (17), which voltage corresponds to the sum of a voltage analogous to the cold temperature $v_k$ of the welding band (1) and a voltage analogous to an arithmetic auxiliary temperature τ, which can be determined from the formula $v_w = R_w/R_k \cdot (\tau + v_k) - \tau$, in that the voltage analogous to the arithmetic auxiliary temperature τ is subtracted by a first subtracting circuit (21) from the output voltage of the multiplying circuit (15) for forming the voltage analogous to the actual temperature $v_w$ of the hot welding band (1) and in zhat the voltage formed by a second subtracting circuit (23), which voltage corresponds to the difference of the analog voltages of the determined actual temperature $v_w$ and the predetermined set temperature of the welding band (1), is entered in the controller (25).

2. Apparatus according to Claim 1, characterized in that, for forming the voltage analogous to the cold resistance $R_k$ of the welding band (1), a voltage divider consisting of a potentiometer (14) is provided.

3. Apparatus according to Claim 1 or 2, characterized in that, for forming the voltage analogous to the cold temperature $v_k$ of the welding band (1), a voltage divider consisting of a potentiometer (18) is provided.

4. Apparatus according to one of Claims 1 to 3, characterized in that, for determining the voltage analogous to the temperature-dependent temperature coefficient (α) as an influencing variable of the voltage analogous to the arithmetic auxiliary temperature τ from the output voltage of the dividing circuit (12), a functional network (29) is provided, in which the analogous values of the temperature coefficient (α) belonging to the respective output voltages of the dividing circuit (12) are stored.

5. Apparatus according to one of Claims 1 to 4, charactdrized in that a circuit (30) for determining the cold resistance $R_k$ of the welding band (1) is provided, which circuit sets the voltage divider (14) to the voltage analogous to the determined cold resistance $R_k$ by means of a control device (32) and a servomotor (34).

6. Apparatus according to one of Claims 1 to 5, characterized in that a circuit (31) for determining the cold temperature $v_k$ of the welding band (1) is provided, which circuit sets the voltage divider (18) to the voltage analogous to the determined cold temperature $v_k$ by means of a control device (33) and a servomotor (35).

F I G.1

EP 0 201 677 B1

FIG.2

EP 0 201 677 B1

FIG.3

EP 0 201 677 B1